# EUROPÄISCHE PATENTANMELDUNG

(11) **EP 2 052 694 A1**
(43) Veröffentlichungstag der Anmeldung: **29.04.2009**
(21) Anmeldenummer: 08167185.1
(22) Anmeldetag: 21.10.2008
(51) Int. Cl.: A61C 13/08, A61C 13/09

(54) **Schneide- oder Eckzahn und Zahnsatz sowie Verfahren zur Herstellung eines Schneide- oder Eckzahns**

(30) Priorität: 22.10.2007 DE 102007050439
(71) Anmelder: Ivoclar Vivadent AG, 9494 Schaan (LI)
(72) Erfinder: Ferrilli, Antonio, 9545 Wängi (CH)
(74) Vertreter: Splanemann Reitzner Baronetzky Westendorp

(57) **Zusammenfassung**

Die Erfindung betrifft einen schichtweise aufgebauten Schneide-oder Eckzahn mit einer eine Dentinmasse (28) wenigstens teilweise abdeckenden Schneidemasse (30). Die Dentinmasse weist an ihrem okklusalen Ende (38) sich in okklusaler Richtung erstreckende Vorsprünge (42) und/oder Unebenheiten (42, 46 und 48) auf, die der 0,05 bis 0,4-fachen Gesamtlänge eines Zahnes entsprechen.

## Beschreibung

Es ist seit langem bekannt, Zähne, insbesondere Schneide- oder Eckzähne aus Schichten aufzubauen. Hierbei wird eine Schneidemasse so aufgebaut, dass sie eine Dentinmasse zum großen Teil abdeckt, abgesehen vom basalen Bereich der Dentinmasse. Die Dentinmasse kann in beliebiger geeigneter Weise mit der Schneidemasse zusammengefügt werden.

So ist es beispielsweise aus der DE-A1 38 27 657 bekannt, zunächst einen Grundkörper aus Dentinmasse aufzubauen und diesen dann zu umspritzen.

Nicht nur bei Kunststoffzähnen, sondern auch bei keramischen Zähnen ist es bekannt, die Schichtstärke der Schneidemasse zu variieren, um den natürlichen Zähnen angenähertes Aussehen zu geben. Ein Beispiel hierfür ist die Lösung gemäß der DE-OS 1 903 935.

Während die Schneidemasse typischerweise durchscheinend ist, ist die Dentinmasse eher opak. Es ist aber auch bereits vorgeschlagen worden, die Transluzenz der Dentinmasse zu erhöhen. In diesem Falle wird häufig - gerade, wenn ein Metallgerüst eingesetzt ist - ein spezieller Opaker zur Verblendung des Metallgerüsts verwendet. Für die Bereitstellung der Transluzenz wird die Schneidemasse häufig recht dick ausgestaltet. Dies ergibt zwar den erwünschten durchscheinenden Eindruck des Zahns, gibt dem Zahn jedoch einen eher etwas "verwaschenes" Erscheinungsbild.

Eine Verbesserung dieser bekannten Lösungen ist aus der DE 101 27 728 bekannt.

Bei der Lösung gemäß der DE 101 27 728 ist die Schneidemasse vergleichsweise dünn und weist eine ungleichmäßige Schichtdicke auf. Durch die ungleichmäßige Schichtdicke soll das dem natürlichen Zahn angenährte Erscheinungsbild verbessert werden. Andererseits wirkt der Zahn gerade im inzisalen Bereich hierdurch eher ungleichmäßig. Die Schichtdicke sollte auch nicht zu gering gewählt sein, damit nicht Spritzansätze, die für die Herstellung der Dentinmasse verwendet werden, durch die Schneidemasse hindurch sichtbar sind. Derartige Spritzansätze wirken sehr technisch und insofern ästhetisch wenig befriedigend.

Um die "technische" Anmutung von künstlichen Zähnen zu verbessern wurde daher in den letzten Jahren bzw. Jahrzehnten versucht, über bestimmte Farbgebungen die Annäherung an das natürliche Vorbild zu verbessern. Zu nennen ist hier die bekannte Maltechnik, die auch heute noch regelmäßig eingesetzt wird, obwohl sie sehr vom handwerklichen Geschick des Zahntechnikers abhängt und personalintensiv ist.

Ferner ist auch bereits vorgeschlagen worden, innerhalb der Schichten einen Farbgradienten einzubauen. Diese Lösung ist von der technischen Ausgestaltung her jedoch ausgesprochen schwierig zu realisieren, insbesondere, da ein exakter Bezugspunkt festgelegt werden muss, der im Raum liegt und daher schwierig zu definieren ist.

Für die Entformung von Kunststoffkörpern ist es bekannt geworden, die Form-Trennlinien so zu wählen, dass möglichst geringe Hinterschneidungen vorliegen. Typischerweise erfordert das Entformen von Formhälften mit Hinterschneidungen die Realisierung aufwendiger Schieber, die zudem die Genauigkeit beeinträchtigen. Auch vor dem Hintergrund dieser Überlegungen werden typische Zähne, insbesondere Kunststoffzähne in der Regel hinterschneidungsfrei schräg zur Inzisalseite hin zulaufend ausgebildet, wobei die Formtrennung an der "dicksten" Stelle des Zahns realisiert ist, die bei Schneidezähnen durchaus relativ nah am Inzisalbereich angeordnet sein kann. Auch dies hat zu eher glatten und geraden Oberflächen geführt.

Vor dem Hintergrund dieser Nachteile liegt der Erfindung die Aufgabe zur Grunde, einen schichtweise aufgebauten Schneide- oder Eckzahn gemäß dem Oberbegriff von Anspruch 1 zu schaffen, der einerseits günstig herzustellen ist, ästhetisch wesentlich verbessert ist, aber dennoch ein den natürlichen Zähnen angenähertes Erscheinungsbild zeigt.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass der schichtweise aufgebaute Schneide- oder Eckzahn gemäß der Erfindung keinen festen Vorgaben hinsichtlich der Außenform unterliegt. So ist es möglich, bei einem Schneidezahn eine im Wesentlichen gerade oder höchstens leicht wellige inzisale Schneidkante der Schneidemasse vorzusehen. Dies stellt einen erheblichen Fortschritt gegenüber einer deutlich welligen Ausgestaltung dar, wie sie zur Erzielung einer natürlichen Anmutung bereits angestrebt wurde.

So kann erfindungsgemäß die Welligkeit oder Unebenheit der äußeren Schneidkante weniger als 30%, insbesondere weniger als 20% und bevorzugt etwa 10% der Schichtstärke der Schneidemasse an dieser Stelle betragen.

Dies verhindert jedoch nicht die erfindungsgemäße Ausgestaltung mit sich in okklusaler Richtung erstreckenden Vorsprüngen und/oder Unebenheiten. Erfindungsgemäß erstrecken sich die Vorsprünge und/oder Unebenheiten der Dentinmasse, also der Grenzschicht zwischen der Dentinmasse und Schneidemasse, über eine gewisse vorgegebene Höhe, die von 0 verschieden ist und deutlich weniger als die Hälfte der Gesamtlänge eines Zahns beträgt. Die Höhe der Unebenheiten oder Vorsprünge kann beispielsweise nur 1/20 der Höhe des Zahns betragen. Dies ist beispielsweise dann sinnvoll, wenn eine sehr geringe Schichtdicke für die Schneidemasse realisiert ist, die wiederum beispielsweise 1/10 oder sogar ebenfalls 1/20 der Höhe eines Zahns betragen kann. Jedoch kann die Höhe der Unebenheiten auch wesentlich größer gewählt sein, was sinnvoll ist, wenn die Schichtdicke der Schneidemasse zur Verbesserung der Transluzenz deutlich größer gewählt ist, beispielsweise 20% oder gar 30% der Zahnhöhe.

Erfindungsgemäß sind insofern die Stärke der Schneidemasse und die Höhe der Vorsprünge und/oder Unebenheiten miteinander koriiert, wobei es besonders günstig ist, wenn die Stärke der Schneidemasse bei geringer Vorsprungshöhe etwas größer und bei großer Vorsprungshöhe etwas geringer als die Vorsprungshöhe ist.

Überraschend lassen sich erfindungsgemäß mit einfachen Mitteln die optischen Eigenschaften der Schneide- oder Eckzähne drastisch verbessern, und zwar so, dass sowohl ein verwaschenes Erscheinungsbild als auch ein zu "technischer" Eindruck vermieden wird.

Erfindungsgemäß ist es besonders günstig, dass die Erfindung erlaubt, mit einem ästhetisch sehr ansprechendem Erscheinungsbild mit einer vergleichsweise großen Schichtstärke für die Schneidemasse zu arbeiten. Die Schichtstärke kann beispielsweise günstigerweise mindestens 20% der Länge eines Zahns betragen. Dies ermöglicht eine mechanisch verbesserte Ausgestaltung, denn zu den dünne Schichtstärken sind technisch schwieriger zu handhaben, insbesondere, wenn die Haftung zwischen Schneidemasse und Dentinmasse aufgrund der unterschiedlichen chemischen Substanzen, aus denen diese aufgebaut sind, nicht leicht zu beherrschen sind, beispielsweise, wenn unterschiedliche Keramiktypen (Zirkonoxid- bzw. Silikat-Keramiken) verwendet werden. Auch hat es sich gezeigt, dass die höhere Schichtstärke die Stabilität gegenüber unterschiedlichen Wärmeausdehnungskoeffizienten verbessert, die bei unterschiedlichen Keramiken meist recht problematisch sind.

Überraschend ist insofern die Abplatzneigung der Schneidemasse deutlich geringer, wobei erfindungsgemäß die Realisierung von Unebenheiten hier auch unterstützend wirkt, da hierdurch die Haftung offenbar ebenfalls verbessert wird.

Insofern kommt der Realisierung von Unebenheiten an der Grenzschicht zwischen Schneidemasse und Dentinmasse eine Doppelfunktion zu. Dass insofern ein Fortschritt erzielbar ist, ist überraschend, denn die Rauhigkeit keramischer Oberflächen ist an sich bekannt, wobei es erfindungsgemäß besonders günstig ist, wenn weder die Schneidmasse an ihrer Grenzfläche zur Dentinmasse noch die Dentinmasse an ihrer Grenzfläche zur Schneidemasse Bearbeitungsvorgängen unterworfen ist. Vielmehr ist es in diesem Zusammenhang bevorzugt, über eine speziell ausgebildete Kernform für die Formgebung der Grenzschicht zu sorgen, wobei die Kernform an ihrem inzisalen oder okklusalen Ende die Oberflächenstruktur und Vorsprünge sowie Unebenheiten aufweist, die später die Grenzfläche zwischen Dentinmasse und Schneidemasse aufweisen soll.

Diese Herstellung ist bevorzugt, wenn zunächst die Schneidemasse und dann die Dentinmasse für die Realisierung des erfindungsgemäßen Zahns eingegossen wird.

Alternativ ist auch eine Schichtung von innen nach außen möglich. Bei diesem Verfahren wird zunächst eine Kernform für die Dentinmasse gegossen, deren Innenprofilierung wiederum exakt der Grenzfläche zwischen Schneidemasse und Dentinmasse entspricht. Hieran anschließend wird die gegossene Dentinmasse selbst als Innenform für die Schneidemasse verwendet und die Schneidemasse in den sich so ergebenen schichtförmigen flächigen Formhohlraum eingebracht, wobei wiederum durch die Unebenheiten eine besonders gute Verankerung gerade auch im stark belasteten Inzisalbereich des Zahns realisierbar ist.

Die erfindungsgemäße Lösung ist besonders gut für die Realisierung von Keramikzähnen geeignet. Während Kunststoffmaterial aufgrund des verwendeten Materials leichter herzustellen ist - allein schon, da Kunststoff gegenüber Keramik vergleichsweise elastisch ist und daher innere Spannungen viel eher toleriert - ist es erfindungsgemäß möglich, das durch die Verwendung von Keramiken entstehende Problem, eine Keramik mit natürlicher Anmutung zu realisieren, ohne mechanische Probleme zu erzeugen, mit überraschend einfachen Mitteln erzielen.

Erfindungsgemäß ist es ferner besonders günstig, eine vergleichsweise harte Dentinmasse mit einer demgegenüber weicheren Schneidemasse zu kombinieren. Durch die gute Verankerung lassen sich auch unterschiedliche Materialien realisieren, und die Verwendung einer weicheren Schneidemasse hat den Vorteil, dass der Antagonist des restaurierten Zahns weniger stark in Mitleidenschaft gezogen wird.

In einer weiteren vorteilhaften Ausgestaltung ist es vorgesehen, die Dentinmasse an ihrem okklusalen Ende sich in okklusaler Richtung erstreckende Vorsprünge und/oder Unebenheiten aufweist, die der 0,05 bis 0,4-fachen Gesamtlänge eines Zahnes entsprechen.

In einer weiteren vorteilhaften Ausgestaltung ist es vorgesehen, dass die in zervikaler und/oder bukkaler und/oder mesialer und/oder distaler Richtung weisende Oberfläche der Dentinmasse, wenigstens im okklusalen Endbereich der Dentinmasse, die Vorsprünge oder Unebenheiten aufweist.

In einer weiteren vorteilhaften Ausgestaltung ist es vorgesehen, dass sich die Unebenheiten in okklusaler Richtung über wenigstens 1/3, insbesondere 1/4, der Gesamtlänge des Zahnes erstrecken.

In einer weiteren vorteilhaften Ausgestaltung ist es vorgesehen, dass die Unebenheiten in Form von Vertiefungen und/oder Erhöhungen ausgebildet sind, die sich im Wesentlichen parallel zur Längserstreckung des Zahnes erstrecken.

In einer weiteren vorteilhaften Ausgestaltung ist es vorgesehen, dass die Vertiefungen unterschiedlich tief und/oder die Erhöhungen unterschiedlich hoch ausgebildet sind.

In einer weiteren vorteilhaften Ausgestaltung ist es vorgesehen, dass der inzisale Dentinverlauf bei allen Zähnen einer Zahngarnitur unterschiedlich ist.

In einer weiteren vorteilhaften Ausgestaltung ist es vorgesehen, dass der inzisale Dentinverlauf bei unterschiedlichen Zahnformen unterschiedlich ist.

In einer weiteren vorteilhaften Ausgestaltung ist es vorgesehen, dass sich die Vorsprünge und/oder Unebenheiten in der Grenzschicht zwischen Schneidemasse und Dentinmasse befinden.

In einer weiteren vorteilhaften Ausgestaltung ist es vorgesehen, dass die Dentinmasse eine größere Opazität aufweist als die Schneidemasse.

In einer weiteren vorteilhaften Ausgestaltung ist es vorgesehen, dass die Unebenheiten über die Grenzfläche zwischen Dentinmasse und Schneidemasse verteilt sind, insbesondere in mehreren Dimensionen, und dass sich insbesondere kleinere und größere Radien bei den Unebenheiten abwechseln.

In einer weiteren vorteilhaften Ausgestaltung ist es vorgesehen, dass Unebenheiten in der Grenzschicht zwischen Schneidemasse und Dentinmasse mit Radien ausgebildet sind, die sich über den Verlauf der Unebenheiten ändern und insbesondere geringer als eine zehnfache Zahnhöhe und größer als ein Zehntel einer Zahnhöhe sind.

In einer weiteren vorteilhaften Ausgestaltung ist es vorgesehen, dass Unebenheiten wellenförmig ausgebildet sind, insbesondere als zweidimensionale Wellen, die sich über die Oberfläche der im Wesentlichen stumpfförmigen Dentinmasse erstrecken und von der Schneidemasse gefüllt sind.

In einer weiteren vorteilhaften Ausgestaltung ist es vorgesehen, dass einer Unebenheit in der Grenzschicht zwischen Dentinmasse und Schneidemasse eine Unebenheit auf der Oberfläche der Schneidemasse folgt.

In einer weiteren vorteilhaften Ausgestaltung ist es vorgesehen, dass in der Dentinmasse Fissuren, Einschnitte oder Gräben ausgebildet sind, die von Schneidemasse gefüllt sind.

In einer weiteren vorteilhaften Ausgestaltung ist es vorgesehen, dass die Dentinmasse für die Realisierung der ersten und zweiten Schneidezähne radial insbesondere mesial und hinsichtlich der ersten Schneidezähne auch distal eine Vorwölbung aufweist, die einer entsprechenden Vorwölbung der Schneidemasse an der Außenform der Schneidemasse an dieser Stelle folgt und dass angrenzend an diese Vorwölbung die Dentinmasse zahneinwärts - in Vorderansicht des Zahns betrachtet - zurückspringt.

In einer weiteren vorteilhaften Ausgestaltung ist es vorgesehen, dass die Schneidemasse im Bereich von Unebenheiten eine Stärke von weniger als 2 mm aufweist und Unebenheiten der Dentinmasse aufgrund der Tranzluzenz bzw. Transparenz der Schneidemasse durch diese hindurch sichtbar sind.

In einer weiteren vorteilhaften Ausgestaltung ist es vorgesehen, dass die Dentinmasse in an sich bekannter Weise eine größere Opazität als die Schneidemasse aufweist, das jedoch die Zahnfarbe der Dentinmasse insbesondere mit größerer Leuchtkraft ausgebildet ist.

In einer weiteren vorteilhaften Ausgestaltung ist es vorgesehen, dass die Dentinmasse mit einem Opaker hinterlegt ist, der ein Gerüst, auf dem die Dentinmasse aufgebracht ist oder aufzubringen ist, verblendet.

In einer weiteren vorteilhaften Ausgestaltung ist es vorgesehen, dass zunächst die Schneidemasse zwischen einer Zahnaußenform und einer Schneidemassen-Kernform eingebracht wird, die an ihrem okklusalen Ende wenigstens einen sich in okklusaler Richtung erstreckenden Vorsprung oder wenigstens eine Unebenheit aufweist, deren Höhe insbesondere 1/20 bis knapp zur Hälfte der Gesamtlänge eines Zahns entspricht, und dass hieran anschließend die Dentinmasse in den Zwischenraum zwischen der Schneidemasse und der Dentinmassen-Kernform eingebracht wird.

In einer weiteren vorteilhaften Ausgestaltung ist es vorgesehen, dass die in zervikaler und/oder bukkaler und/oder mesialer und/oder distaler Richtung weisende Oberfläche der Schneidemasse-Kernform wenigstens in ihrem okklusalen Endbereich Vorsprünge oder Unebenheiten aufweist.

In einer weiteren vorteilhaften Ausgestaltung ist es vorgesehen, dass die in zervikaler und/oder bukkaler und/oder mesialer und/oder distaler Richtung weisende Oberfläche der Schneidemasse-Kernform wenigstens in ihrem okklusalen Endbereich Vorsprünge oder Unebenheiten aufweist.

In einer weiteren vorteilhaften Ausgestaltung ist es vorgesehen, dass sich die Unebenheiten oder Vorsprünge in zervikaler Richtung über wenigstens 1/3, insbesondere über 1/4 der Gesamtlänge eines Zahns erstrecken.

In einer weiteren vorteilhaften Ausgestaltung ist es vorgesehen, dass die Unebenheiten in Form von Vertiefungen und/oder Erhöhungen ausgebildet sind, die sich im Wesentlichen parallel zur Längserstreckung des Zahnes erstrecken.

In einer weiteren vorteilhaften Ausgestaltung ist es vorgesehen, dass die Vertiefungen unterschiedlich tief und/oder die Erhöhungen unterschiedlich hoch ausgebildet sind.

In einer weiteren vorteilhaften Ausgestaltung ist es vorgesehen, dass die Schneidemassen-Kernform als verlorene Form ausgebildet ist und sowohl an ihrer Unterseite als auch an ihren Seitenwänden Unebenheiten aufweist, insbesondere jedoch nur an dem okklusalen Endbereich.

In einer weiteren vorteilhaften Ausgestaltung ist es vorgesehen, dass die Unebenheiten der Schneidemassen-Kernform den Mamelons natürlicher Zähne optisch nachgebildet sind.

In einer weiteren vorteilhaften Ausgestaltung ist es vorgesehen, dass eine Dentinmasse zwischen eine Dentinmassen-Kernform und eine Dentinmasse-Außenform eingebracht wird, wobei die Außenform innenseitig Unebenheiten aufweist, insbesondere an dem okklusalen Ende, und dass nach mindestens teilweisem Aushärten der Dentinmasse die Schneidemasse zwischen der Dentinmasse und einer Schneidemassen-Außenform eingebracht wird.

In einer weiteren vorteilhaften Ausgestaltung ist es vorgesehen, dass die Unebenheiten an der Schneidemassen-Außenform Mamelons natürlicher Zähne optisch nachgebildet sind.

Weitere Vorteile, Einzelheiten und Merkmale ergeben sich aus der nachstehenden Beschreibung zweier Ausführungsbeispiele anhand der Zeichnungen. Es zeigen:
- Fig. 1: eine beispielhafte Ausführungsform eines Satzes von Schneide- und Eckzähnen, die erfindungsgemäß ausgestaltet sind;
- Fig. 2: eine weitere Ausführungsform eines weiteren Satzes von Schneide- und Eckzähnen, die erfindungsgemäß ausgestaltet sind; und
- Fig. 3: zeigt eine Draufsicht auf einen Satz Schneide- und Eckzähne, die erfindungsgemäß ausgestaltet sind.

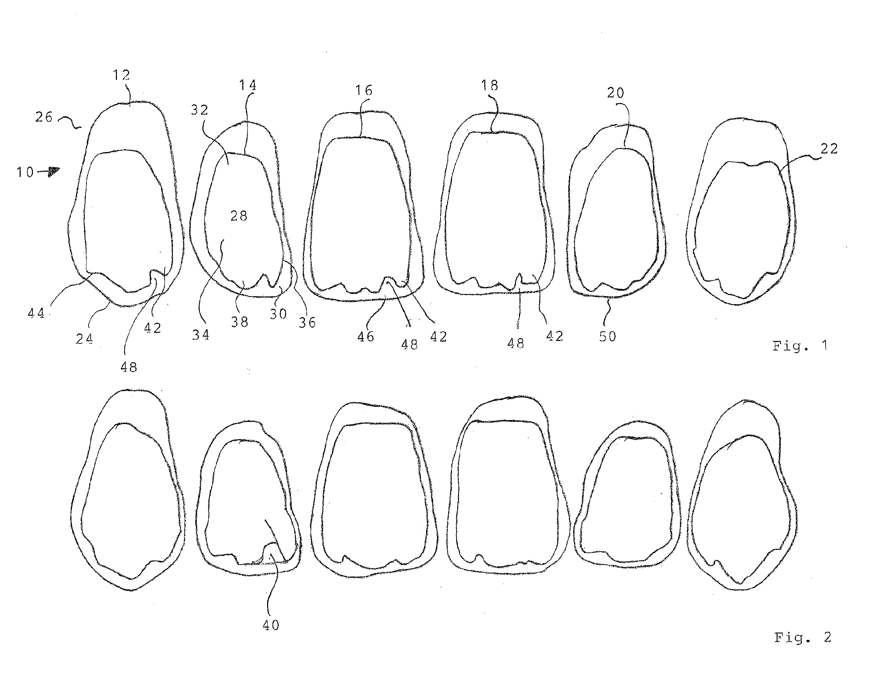

In Fig. 1 ist beispielhaft ein erfindungsgemäßer Oberkiefer-Zahnsatz mit vier Schneidezähnen und zwei Eckzähnen in einer Ausführungsform dargestellt. Der Zahnsatz 10 besteht aus einem Eckzahn 12, vier Schneidezähnen 14, 16, 18 und 20 sowie einem weiteren Eckzahn 22. Die Darstellung betrifft je einen Schnitt durch den Zahn im Bereich seiner größten Ausdehnung. Jeder Zahn hat eine inzisale Schneidkante 24 und erstreckt sich zwischen dieser Schneidkante und dem basalen Ende 26 in einer Art und Weise, wie es von der Grundform her an sich bekannt ist.

Es sei hier der Einfachheit halber der Schneidezahn 14, der als Zahn II anzusehen ist, betrachtet. Der Zahn 14 ist grundsätzlich aus Dentinmasse 28 aufgebaut, die in dem dargestellten Ausführungsbeispiel vollständig von Schneidemasse 30 umhüllt ist. Auch wenn bei den hier dargestellten Ausführungsbeispielen die Schneidemasse sich auch über das basale Ende 26 erstreckt, versteht es sich, dass es auch möglich ist, dort die Dentinmasse vorzusehen.

In dem dargestellten Ausführungsbeispiel erstreckt sich die Schneidemasse dementsprechend nach der Art einer dreidimensionalen Hüllschicht um die Dentinmasse 28. Die Dentinmasse 28 verläuft über ihren bukkalen Endbereich 32 und ihre distalen und mesialen Seitenflächen 34 und 36 je im Wesentlichen gerade, abgesehen von einer leichten Bauchigkeit bzw. ggf. einer leichten Welligkeit.

Hingegen ist erfindungsgemäß der okklusale oder inzisale Endbereich 38 der Dentinmasse stark wellig. Die Welligkeit oder das Vorsehen von Unebenheiten dort entspricht einer Höhe, die im Beispielsfall max. 6% der Höhe des Zahns entspricht.

Die Dentinmasse 28 wird von der Schneidemasse 30 auch dort vollständig abgedeckt. Die Schichtstärke entspricht dort, also im okklusalen Bereich, im Durchschnitt etwa wiederum 6% der Höhe der Schneidemasse. Es ist bevorzugt, dass die Welligkeit oder die Ausbildung von Unebenheiten recht intensiv, aber je mit Radien vorgesehen ist. So ist der maximale Neigungswinkel 40 von Schrägflächen im Bereich der okklusalen Grenzfläche zwischen Schneidemasse und Dentinmasse bei dem Schneidezahn 14 etwa 60%; überwiegend ist der Neigungswinkel 40 jedoch deutlich geringer, und liegt typischerweise bei 10% bis 20%.

Die minimale Schichtstärke der Schneidemasse 30 im inzisalen Endbereich 38 beträgt 4% der Zahnhöhe.

Die vorstehend angegebenen Werte lassen sich sowohl zwischen einzelnen Schneide- oder Eckzähnen als auch zwischen einzelnen Zahnsätzen variieren, so ein lebendiges und der natürlichen Anmutung recht ähnliches Zahnbild zu erzielen.

So beträgt die minimale Schichtstärke im Inzisalbereich der Schneidemasse 30 für den Eckzahn 12 8%; an einer Stelle ist dort ein deutlicher Vorsprung 42 ausgebildet, während im Übrigen eine lediglich leicht welligere Ausgestaltung der Grenzschicht 44 zwischen Schneidemasse und Dentinmasse im Inzisalbereich vorgesehen ist.

Demgegenüber beträgt die minimale Schichtstärke der Schneidemasse 30 im Inzisalbereich 46 des Zahns 18 lediglich 1% der Zahnhöhe; es ist eine recht intensiv ausgebildete Fissur 48 vorgesehen, die einen Vorsprung 42 seitlich mesial oder distal abtrennt.

Ähnliche Ausgestaltungen sind für die Zähne 16, 20 und 22 vorgesehen, wobei die aus den Figuren ersichtlichen Darstellungen beispielhaft mögliche Abweichungen hinweisen.

Aus Fig. 2 ist ein ähnlicher Zahnsatz ersichtlich. Gleiche Bezugszeichen weisen hier auf gleiche oder entsprechende Teile hin. Bei diesem Zahnsatz ist allgemein die Welligkeit und Intensität der Vorsprünge geringer, so dass sich Unebenheiten weniger tief bzw. hoch erstrecken. Hier beträgt die minimale Schichtstärke 1 mm.

In an sich bekannter Weise ist die Opazität der Dentinmasse 28 größer als die Opazität der Schneidemasse 30. Die Unebenheiten 42, 46 und 48 wechseln einander ab, und kleinere und größere Radien sind ebenfalls verteilt vorgesehen. Auch erstrecken sich die Unebenheiten keineswegs lediglich in der Darstellungsrichtung, sondern auch in der Richtung senkrecht zur Darstellung.
Es ist auch möglich, den starken Unebenheiten in der Grenzschicht 44 eine auf 1/3 oder sogar auf 1/10 reduzierte Unebenheit im Bereich der inzisalen Schneidkante folgen zu lassen. Hierdurch lässt sich noch eine im Wesentlichen gerade Schneidkante realisieren, die aber dennoch einer natürlichen Zahnform ähnelt.

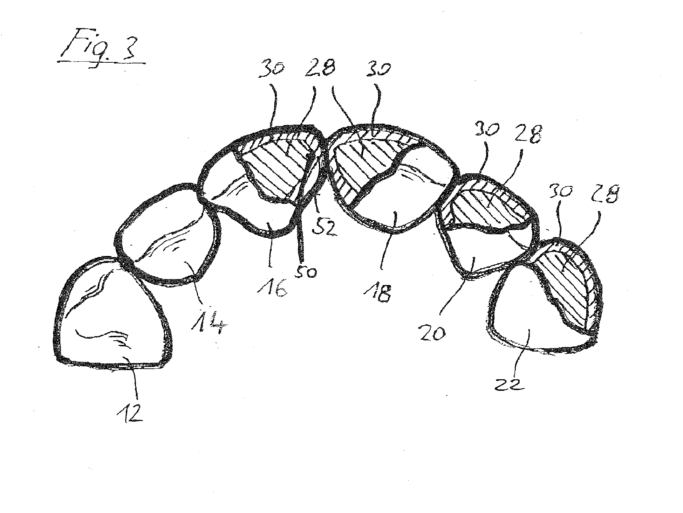

Fig. 3 zeigt erste und zweite Inzisiv- bzw. Schneidezähne 14, 16, 18, 20 sowie Eckzähne 12, 22 in Ansicht von oben. Das Dentinmaterial 28 zur Bildung der ersten und zweiten Inzisiv- bzw. Schneidezähne 14, 16, 18, 20 weist eine radiale, insbesondere mesiale und mit Bezug auf die ersten Inzisiv- bzw. Scheidezähne zudem eine distale Auswölbung auf, welche einer entsprechenden Auswölbung der Schneidemasse 30 auf dem Außenumriss der Schneidemasse 30 an dieser Stelle folgt. Benachbart zu dieser Auswölbung ist das Dentinmaterial 28 in Richtung des Zahninnenraums zurückgesetzt, wie es aus der Vorderansicht des Zahns ersichtlich ist.

## Patentansprüche

1. Schichtweise aufgebauter Schneide- oder Eckzahn mit einer eine Dentinmasse wenigstens teilweise abdeckenden Schneidemasse, **dadurch gekennzeichnet, dass** die Dentinmasse (28) an ihrem okklusalen Ende (38) sich in okklusaler Richtung erstreckende Vorsprünge (42) und/oder Unebenheiten (42, 46 und 48) aufweist, die der 0,05 bis 0,4-fachen Gesamtlänge eines Zahnes entsprechen.

2. Schneide- oder Eckzahn nach Anspruch 1, **dadurch gekennzeichnet, dass** die in zervikaler und/oder bukkaler und/oder mesialer und/oder distaler Richtung weisende Oberfläche der Dentinmasse (28), wenigstens im okklusalen Endbereich (38) der Dentinmasse (28), die Vorsprünge (42) oder Unebenheiten (42, 46 und 48) aufweist.

3. Schneide- oder Eckzahn nach Anspruch 2 oder 3, **dadurch gekennzeichnet, dass** sich die Unebenheiten (42, 46 und 48) in okklusaler Richtung über wenigstens 1/3, insbesondere 1/4, der Gesamtlänge des Zahnes erstrecken.

4. Schneide- oder Eckzahn nach Anspruch 1, 2 oder 3, **dadurch gekennzeichnet, dass** die Unebenheiten (42, 46 und 48) in Form von Vertiefungen und/oder Erhöhungen ausgebildet sind, die sich im Wesentlichen parallel zur Längserstreckung des Zahnes erstrecken.

5. Schneide- oder Eckzahn nach Anspruch 4, **dadurch gekennzeichnet, dass** die Vertiefungen unterschiedlich tief und/oder die Erhöhungen unterschiedlich hoch ausgebildet sind.

6. Schneide- oder Eckzahn nach einem der vorhergehenden Ansprüche, **dadurch gekennzeichnet, dass** sich die Vorsprünge (42) und/oder Unebenheiten (42, 46 und 48) in der Grenzschicht (44) zwischen Schneidemasse (30) und Dentinmasse (28) befinden.

7. Zahnsatz nach einem der vorhergehenden Ansprüche, **dadurch gekennzeichnet, dass** die Unebenheiten (42, 46 und 48) über die Grenzfläche zwischen Dentinmasse (28) und Schneidemasse (30) verteilt sind, insbesondere in mehreren Dimensionen, und dass sich insbesondere kleinere und größere Radien bei den Unebenheiten (42, 46 und 48) abwechseln.

8. Zahnsatz nach einem der vorhergehenden Ansprüche, **dadurch gekennzeichnet, dass** Unebenheiten (42, 46 und 48) in der Grenzschicht (44) zwischen Schneidemasse (30) und Dentinmasse (28) mit Radien ausgebildet sind, die sich über den Verlauf der Unebenheiten (42, 46 und 48) ändern und insbesondere geringer als eine zehnfache Zahnhöhe und größer als ein Zehntel einer Zahnhöhe sind.

9. Zahnsatz nach einem der vorhergehenden Ansprüche, **dadurch gekennzeichnet, dass** Unebenheiten (42, 46 und 48) wellenförmig ausgebildet sind, insbesondere als zweidimensionale Wellen, die sich über die Oberfläche der im Wesentlichen stumpfförmigen Dentinmasse (28) erstrecken und von der Schneidemasse (30) gefüllt sind.

10. Zahnsatz nach einem der vorhergehenden Ansprüche, **dadurch gekennzeichnet, dass** in der Dentinmasse (28) Fissuren (48), Einschnitte oder Gräben ausgebildet sind, die von Schneidemasse (30) gefüllt sind.

11. Zahnsatz nach einem der vorhergehenden Ansprüche, **dadurch gekennzeichnet, dass** die Dentinmasse (28) für die Realisierung der ersten und zweiten Schneidezähne (14, 16, 18 und 20) radial insbesondere mesial und hinsichtlich der ersten Schneidezähne (14, 16, 18 und 20) auch distal eine Vorwölbung aufweist, die einer entsprechenden Vorwölbung der Schneidemasse (30) an der Außenform der Schneidemasse (30) an dieser Stelle folgt und dass angrenzend an diese Vorwölbung die Dentinmasse (28) zahneinwärts - in Vorderansicht des Zahns betrachtet - zurückspringt.

12. Zahnsatz nach einem der vorhergehenden Ansprüche, **dadurch gekennzeichnet, dass** die Schneidemasse (30) im Bereich von Unebenheiten (42, 46 und 48) eine Stärke von weniger als 2 mm aufweist und Unebenheiten (42, 46 und 48) der Dentinmasse (28) aufgrund der Tranzluzenz bzw. Transparenz der Schneidemasse (30) durch diese hindurch sichtbar sind.

13. Verfahren zur Herstellung eines Schneide- oder Eckzahns, der wenigstens aus Dentinmasse (28) und Schneidemasse (30) aufgebaut ist, **dadurch gekennzeichnet, dass** zunächst die Schneidemasse (30) zwischen einer Zahnaußenform und einer Schneidemassen (30)-Kernform eingebracht wird, die an ihrem okklusalen Ende (38) wenigstens einen sich in okklusaler Richtung erstreckenden Vorsprung (42) oder wenigstens eine Unebenheit (42, 46 und 48) aufweist, deren Höhe insbesondere 1/20 bis knapp zur Hälfte der Gesamtlänge eines Zahns entspricht, und dass hieran anschließend die Dentinmasse (28) in den Zwischenraum zwischen der Schneidemasse (30) und der Dentinmassen (28)-Kernform eingebracht wird.

14. Verfahren nach Anspruch 22, **dadurch gekennzeichnet, dass** die Schneidemassen (30)-Kernform als verlorene Form ausgebildet ist und sowohl an ihrer Unterseite als auch an ihren Seitenwänden Unebenheiten (42, 46 und 48) aufweist, insbesondere jedoch nur an dem okklusalen Endbereich (38).

15. Verfahren zur Herstellung eines Zahnsatzes oder eines Zahns aus einem Zahnsatz, **dadurch gekennzeichnet, dass** eine Dentinmasse (28) zwischen eine Dentinmassen (28)-Kernform und eine Dentinmasse (28)-Außenform eingebracht wird, wobei die Außenform innenseitig Unebenheiten (42, 46 und 48) aufweist, insbesondere an dem okklusalen Ende (38), und dass nach mindestens teilweisem Aushärten der Dentinmasse (28) die Schneidemasse (30) zwischen der Dentinmasse (28) und einer Schneidemassen (30)-Außenform eingebracht wird.

16. Verfahren nach Anspruch 25, **dadurch gekennzeichnet, dass** die Unebenheiten (42, 46 und 48) an der Schneidemassen (30)-Außenform Mamelons natürlicher Zähne optisch nachgebildet sind.
